# EUROPEAN PATENT APPLICATION

(11) **EP 4 672 484 A1**
(43) Date of publication of application: **31.12.2025**
(21) Application number: 24907973.2
(22) Date of filing: 16.12.2024
(51) Int. Cl.: H01M 50/538, H01M 50/152, H01M 50/184

(54) **BATTERY CELL, AND BATTERY PACK AND VEHICLE COMPRISING SAME**

(30) Priority: 18.12.2023 KR 20230184304; 11.12.2024 KR 20240183383
(71) Applicant: LG ENERGY SOLUTION, LTD., Seoul 07335 (KR)
(72) Inventor: HWANGBO, Kwang-Su, Daejeon 34122 (KR); KO, Kwang-Hun, Daejeon 34122 (KR); KIM, Do-Gyun, Daejeon 34122 (KR); LEE, Da-Som, Daejeon 34122 (KR); HAN, Jae-Min, Daejeon (KR)
(74) Representative: Goddar, Heinz J.
(86) International application number: PCT/KR2024/020388
(87) International publication number: WO 2025/135690

(57) **Abstract**

The present disclosure provides a battery cell including: a battery can including a bottom member and a side wall member connected to the bottom member and extending in an axial direction, and having an opening at one end; an electrode assembly configured to be received inside the battery can through the opening of the battery can; a cap configured to cover the opening of the battery can; a gasket interposed between the battery can and the cap; and a current collector having an electrode connection portion having at least a portion electrically connected to one end of the electrode assembly, and a can connection portion extending outward in a radial direction from the electrode connection portion toward the side wall member of the battery can, wherein at least a portion of an edge tip of the can connection portion has a chamfered shape, and a battery pack and vehicle including the same.

## Description

### TECHNICAL FIELD

The present disclosure relates to a battery cell, and a battery pack and vehicle including the same and, more specifically, to a battery cell for improving the stability and performance of the battery cell, and a battery pack and vehicle including the same. This application is based on and claims priority from Korean Patent Application No. 10-2023-0184304, filed on December 18, 2023, with the Korean Intellectual Property Office, the disclosure of which is incorporated herein in its entirety by reference. This application is based on and claims priority from Korean Patent Application No. 10-2024-0183383, filed on December 11, 2024, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

Meanwhile, in the manufacture of secondary batteries, sealing may be performed through a crimping process to secure the stability and performance of the battery cell. This crimping process is intended to protect the battery cells from the external environment and prevent leakage of the internal electrolyte by bringing the battery can into close contact with the gasket.

However, in the conventional technology, the crimping portion may be structurally vulnerable due to the design and structural arrangement of the current collector, so that the sealing performance is not completely guaranteed. In particular, the current collector may not evenly transfer mechanical pressure at the contact area with the gasket, which may cause a small void to form at the sealing area. This void may lower the sealing strength of the gasket, thereby causing leakage of gas generated inside the battery cell or the electrolyte.

In addition, thermal expansion, mechanical pressure imbalance, and slight deformation of the battery can, which may occur during the crimping process, may further worsen the structural vulnerability of the sealing area. This is more likely to bring about, when the secondary battery is exposed to extreme conditions such as external impact, vibration, or repeated temperature changes, the problems such as deterioration of the sealing performance, electrolyte loss from the battery cell, gas leakage, or shortening of lifespan.

Therefore, a new design of current collector is required to maximize the sealing power between the gasket and the battery can and minimize the gap formed in the contact area between the current collector and the gasket.

### DISCLOSURE

### Technical Problem

The present disclosure is designed to solve the problems of the related art, and therefore the present disclosure is directed to providing a battery cell with an improved sealing power, and a battery pack and vehicle including the same.

In addition, the present disclosure is to provide a battery cell capable of minimizing the gap formed in the contact area between the current collector and the gasket, and a battery pack and vehicle including the same.

In addition, the present disclosure is to provide a battery cell capable of minimizing the influence on the sealing power between the components of the battery cell, a battery pack and vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery cell including: a battery can including a bottom member and a side wall member connected to the bottom member and extending in an axial direction, and having an opening at one end; an electrode assembly configured to be received inside the battery can through the opening of the battery can; a cap configured to cover the opening of the battery can; a gasket interposed between the battery can and the cap; and a current collector having an electrode connection portion having at least a portion electrically connected to one end of the electrode assembly, and a can connection portion extending outward in a radial direction from the electrode connection portion toward the side wall member of the battery can, wherein at least a portion of an edge tip of the can connection portion has a chamfered shape.

For example, the can connection portion may extend from the electrode connection portion so as to be inclined at a predetermined angle with respect to an axial direction.

For example, the battery can may include a beading portion recessed inward in the radial direction from a side of the battery can along a circumference near the opening of the battery can, and an edge of the can connection portion may be interposed between the beading portion and the gasket.

For example, a plurality of can connection portions may be provided along a circumferential direction so as to be spaced apart from each other.

For example, the can connection portion may have a coupling portion positioned at the edge of the can connection portion and interposed between the beading portion and the gasket, and the coupling portion may have a chamfered shape at least in a portion thereof.

For example, the coupling portion may have a shape processed to be inclined at a predetermined angle in at least a portion such that a lower area of the coupling portion is greater than an upper area, based on the axial direction.

For example, the coupling portion may have a shape processed to have a predetermined curvature in at least a portion such that a lower area of the coupling portion is greater than an upper area, based on the axial direction.

For example, the coupling portion may be formed to have a thickness smaller than a thickness of the gasket, based on the axial direction.

For example, the gasket may be in contact with the coupling portion and the beading portion of the battery can exposed between adjacent coupling portions, and may have different properties between a portion in contact with the coupling portion and a portion in contact with the beading portion of the battery can.

For example, the gasket may have different properties between a chamfered portion and a non-chamfered portion of the coupling portion.

For example, the coupling portion may include: a flat portion in contact with the beading portion; a distal end connected to the flat portion and disposed outward in the radial direction; an inner end connected to the flat portion and disposed inward in the radial direction; and a side end connected to the flat portion and disposed along a circumferential direction, and at least one of the distal end, the inner end, and the side end has a chamfered shape.

For example, the coupling portion may have a width greater than a width of the beading portion, based on the radial direction, and may have a chamfered shape at least on the side end.

For example, the distal end may be formed to have a smaller thickness than a thickness of the inner end, based on the axial direction.

For example, the distal end of the coupling portion may be in contact with the side wall member of the battery can, and may have a chamfered shape.

For example, the coupling portion may have a width smaller than or equal to a width of the beading portion, based on the radial direction, and may have a chamfered shape at the distal end, the inner end, and the side end.

For example, the gasket may be in contact with the coupling portion and the beading portion of the battery can exposed between adjacent coupling portions, and a protruding portion having a predetermined height may be formed in a portion in contact with the beading portion of the battery can.

For example, the protruding portion may be formed to have a thickness equal to a thickness of the coupling portion, based on the axial direction.

For example, the protruding portion may have a shape corresponding to the chamfered shape of the coupling portion, and may be in contact with the beading portion of the battery can.

For example, the coupling portion may have a protrusion part formed to have a plurality of protrusions configured to come into contact with the gasket in an area having a chamfered shape.

According to another aspect of the present disclosure, there is provided a battery pack including at least one battery cell described above.

According to another aspect of the present disclosure, there is provided a vehicle including at least one battery pack described above.

### Advantageous Effects

A battery cell according to various embodiments of the present disclosure, and a battery pack and vehicle including the same have the effect of improving the airtightness and stability of the battery cell.

In addition, a battery cell according to various embodiments, and a battery pack and vehicle including the same have the effect of minimizing the gap formed in the contact area between the current collector and the gasket.

In addition, a battery cell according to various embodiments, and a battery pack and vehicle including the same have the effect of minimizing the influence on the sealing power between the components of the battery cell.

However, the effects obtainable from the present disclosure are not limited to the above-mentioned effects, and other effects not mentioned above will be clearly understood by those skilled in the art from the description of the invention described below.

### DESCRIPTION OF DRAWINGS

FIG. 1 is a drawing schematically illustrating a battery cell according to an embodiment of the present disclosure.
FIG. 2 is a drawing schematically illustrating an electrode assembly of the battery cell in FIG. 1.
FIG. 3 is a drawing illustrating respective components of the electrode assembly in FIG. 2.
FIG. 4 is a drawing schematically illustrating a current collector of the battery cell in FIG. 1.
FIG. 5 is a drawing illustrating a state in which the current collector and the electrode assembly are coupled in FIG. 4.
FIG. 6 is a drawing illustrating a state in which the battery cell is sealed by a crimping process in FIG. 1.
FIGS. 7 and 8 are drawings illustrating an example in which a gasket is disposed on the current collector in FIG. 4.
FIG. 9 is a drawing illustrating a state in which a coupling portion of the current collector is interposed between a beading portion of the battery can and the gasket in FIG. 4.
FIGS. 10 to 12 are drawings schematically illustrating various embodiments of the coupling portion of the current collector in FIG. 4.
FIG. 13 is a drawing illustrating a state in which a gasket is disposed on the current collector in FIG. 4 according to another embodiment.
FIG. 14 is a drawing illustrating a protrusion part formed on the current collector in FIG. 4.
FIG. 15 is a drawing schematically illustrating a battery pack including a battery cell according to an embodiment of the present disclosure.
FIG. 16 is a drawing schematically illustrating a vehicle including the battery pack in FIG. 15.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, the present disclosure may include various embodiments. Redundant descriptions of substantially the same or similar configurations will be omitted from respective embodiments, and a description will be made based on differences therebetween.

In addition, the sizes of some elements shown in the attached drawings may be exaggerated, instead of reflecting their actual sizes, for convenience of explanation and clarification. In addition, the same reference numerals may indicate the same elements throughout the embodiments.

Although "first," "second," etc. are used to describe various elements, these elements are not limited to these terms. These terms are only used to distinguish one element from another element, and unless otherwise stated, a first element may also be a second element.

Throughout the specification, unless otherwise stated, respective elements may include a single element or a plurality of elements.

Configuration in which an element is disposed "in the upper portion (or lower portion)" or "at the top (or bottom)" of a target element may indicate that the element may be disposed in contact with the upper surface (or lower surface) of the target element and that another element may be interposed between the target element and the element disposed at the top (or bottom) of the target element.

Additionally, the expression "an element is 'connected,' 'coupled,' or 'fastened' to another element" should be understood that the two elements may be directly connected or coupled to each other, and that another element may be "interposed" between the two elements, or that the two elements may be "connected," "coupled," or "fastened" through another element.

A single element herein should be construed to encompass a plurality of elements, unless otherwise stated. In this specification, the expression "an element 'is configured as' or 'includes' other elements or steps" should be understood that the element may exclude some other elements or steps and that the element may further include additional elements or steps.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position, arrangement, or rotation of the target object or the position of the observer.

The present disclosure may be implemented independently of the following embodiments. Furthermore, the present disclosure may be implemented by combining two or more of the following embodiments. The respective embodiments below may be implemented independently and freely combined with each other.

For convenience of explanation in this specification, the direction parallel to the longitudinal direction of a winding axis of the electrode assembly wound in the form of a jellyroll will be referred to as a winding-axis direction Z. In addition, the direction in which the electrode assembly is wound along the longitudinal direction will be referred to as a winding direction X, and the direction moving away from or closer to the winding axis of the electrode assembly will be referred to as a radial direction.

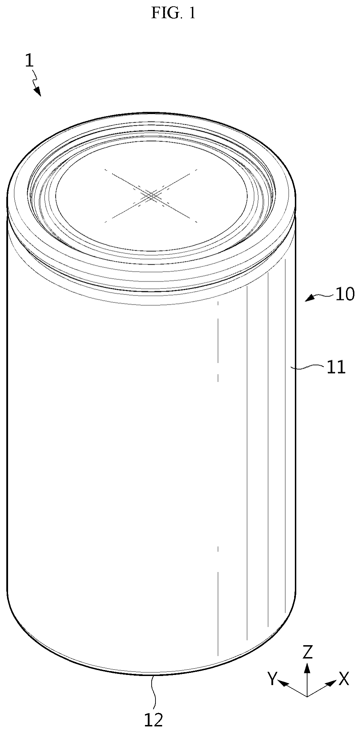

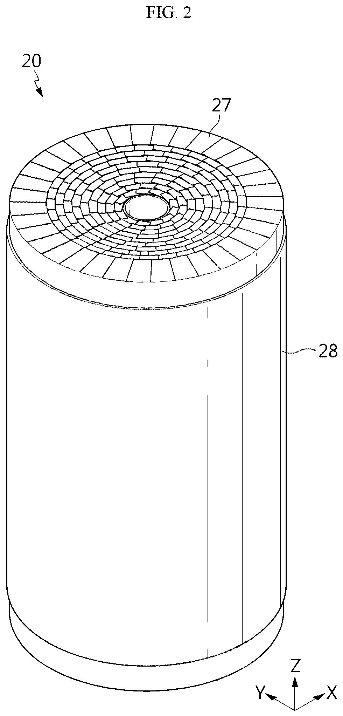

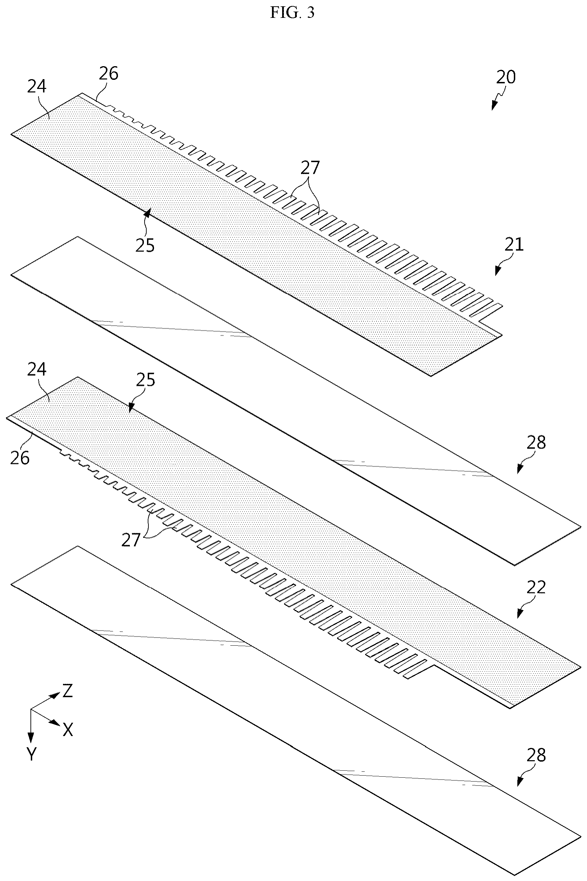

FIG. 1 is a drawing schematically illustrating a battery cell 1 according to an embodiment of the present disclosure, FIG. 2 is a drawing schematically illustrating an electrode assembly 20 of the battery cell 1 in FIG. 1, and FIG. 3 is a drawing illustrating respective components of the electrode assembly 20 in FIG. 2.

First, a schematic structure of a battery cell 1 according to an embodiment of the present disclosure will be described.

The battery cell 1 may be a cylindrical battery cell. For example, the battery cell 1 may be a cylindrical battery cell having a form factor ratio (a value obtained by dividing the diameter of the cylindrical battery cell by the height, which is defined as a ratio of the diameter to the height) greater than approximately 0.4.

Here, the form factor may be a value indicating the diameter and height of the cylindrical battery cell. The cylindrical battery cells may be 46110 cells, 48750 cells, 48110 cells, 48800 cells, or 46800 cells by applying a value indicating the form factor thereto. Here, the first two digits indicate the diameter of the cell, the next two digits indicate the height of the cell, and the last digit 0 indicates that the cross-section of the cell is circular.

In addition, the battery cell 1 may be, for example, a cylindrical battery cell having a form factor ratio (ratio of the diameter in the radial direction to the height in the winding-axis direction ) greater than about 0.4. For example, the diameter of the battery cell 1 may be 40 mm to 50 mm, and the height may be 60 mm to 130 mm. The form factor of the battery cell 1 may be, for example, 46110, 4875, 48110, 4880, or 4680.

However, the shape of the battery cell 1 according to the present disclosure is not limited thereto, and the battery cell 1 may have other shapes. For example, the battery cell 1 may be applied to a prismatic battery.

Referring to FIGS. 1 to 3, the battery cell 1 according to the present embodiment includes a battery can 10 and an electrode assembly 20.

The battery can 10 may be of a cylindrical structure for the cylindrical battery cell. In this case, a side wall member 11 may form a side of the cylinder of the battery can 10, and a bottom member 12 may be connected to the side wall member 11 to form one end of the cylinder. That is, the bottom member 12 may be a closed portion of the battery can 10, and the other side of the battery can 10 facing the bottom member 12 may have an opening.

The bottom member 12 may be configured in the shape of a disc having a through-hole formed in the center, and the side wall member 11 may be configured to surround the bottom member 12 along the radial direction, and may be configured as a cylinder having a predetermined radius. The battery can 10 including the bottom member 12 and the side wall member 11 may be a member formed by deep-drawing a metal sheet having nickel plated on the surface of steel. The materials of the bottom member 12 and the side wall member 11 are not limited thereto.

The battery cell 1 may receive the electrode assembly 20 inside the battery can 10 through the opening of the battery can 10.

The electrode assembly 20 may be configured such that a first electrode 21 and a second electrode 22 are wound around the winding axis with a separator 28 interposed therebetween.

The electrode assembly 20 may be shaped into a jellyroll after winding. The outer shape of the electrode assembly 20 may be circular along the circumferential direction when viewed from the top or bottom of the electrode assembly 20 on the XY plane. However, the electrode assembly 20 is not limited to the structure shown in the embodiment, and may have a winding structure well known in the art.

Each of the first electrode 21, the second electrode 22, and the separator 28 may be formed to have a predetermined width in the winding-axis direction Z and extend a predetermined length along the winding direction X. The first electrode 21 may be a positive electrode plate, and the second electrode 22 may be a negative electrode plate. They may also be opposite electrode plates.

The first electrode 21 and the second electrode 22 may be manufactured in a sheet form. The first electrode 21 and the second electrode 22 may be configured in a form in which an active material layer 25 is applied to at least a portion of the surface of a metal foil 23. The first electrode 21 and the second electrode 22 may have a coated portion 24 to which the active material layer 25 is applied, and an uncoated portion 26 to which the active material layer 25 is not applied.

The uncoated portion 26 may be exposed to the outside of the separator 28 while forming a plurality of winding turns around the winding axis of the electrode assembly 20, and may be used as an electrode tab by itself. That is, each of the positive electrode plate and the negative electrode plate may include the uncoated portion 26 on which an active material is not coated at the long-side end in the winding-axis direction Z. In addition, the uncoated portions 26 of the first electrode 21 and the second electrode 22 may be configured to face opposite directions along the winding-axis direction Z. The first electrode 21 and the second electrode 22 may be received inside the battery can 10 such that the uncoated portion 26 of the first electrode 21 is positioned at one end in the winding-axis direction Z and such that the uncoated portion 26 of the second electrode 22 is positioned at the other end in the winding-axis direction Z. Here, any active materials known in the art may be used without limitation for the positive electrode active material coated on the positive electrode plate and the negative electrode active material coated on the negative electrode plate.

In addition, the separator 28 may be configured by a single porous polymer film made from a polyolefin polymer such as an ethylene homopolymer, a propylene homopolymer, an ethylene/butene copolymer, an ethylene/hexene copolymer, and an ethylene/methacrylate copolymer, or by laminating a plurality of porous polymer films described above. As another example, the separator may be configured as a conventional porous nonwoven fabric, for example, a nonwoven fabric made of high-melting-point glass fiber, polyethylene terephthalate fiber, or the like.

At least one surface of the separator 28 may include a coating layer of inorganic particles formed thereon. In addition, the separator 28 itself may be formed of a coating layer of inorganic particles. The particles forming the coating layer may have a structure combined with a binder so that an interstitial volume exists between adjacent particles.

The uncoated portion 26 may function as an electrode tab by itself.

The uncoated portion 26 may have a plurality of notched tabs 27 in the shape of a flag by forming notches at a predetermined interval along the winding direction X. The plurality of notched tabs 27 may be configured as isosceles trapezoids arranged along the winding direction X. However, the notched tap is not limited thereto, and may have various shapes such as a semicircle, a semi-ellipse, a triangle, a rectangle, a parallelogram, and the like.

In addition, the plurality of notched tabs 27 may be bent in the radial direction to be flattened in the electrode assembly 20. In addition, the notched tabs 27 may be bent inward or outward in the radial direction in the electrode assembly 20.

In addition, the plurality of notched tabs 27 may be bent one by one during the process of forming the jellyroll-type electrode assembly 20. Alternatively, the notched tabs 27 may be bent all at once after forming the jellyroll-type electrode assembly 20.

As described above, the notched tabs 27 of the first electrode 21 and the notched tabs 27 of the second electrode 22, which are radially bent to overlap each other, may provide a plane substantially perpendicular to the winding-axis direction Z at both ends of the electrode assembly 20 in the winding-axis direction Z.

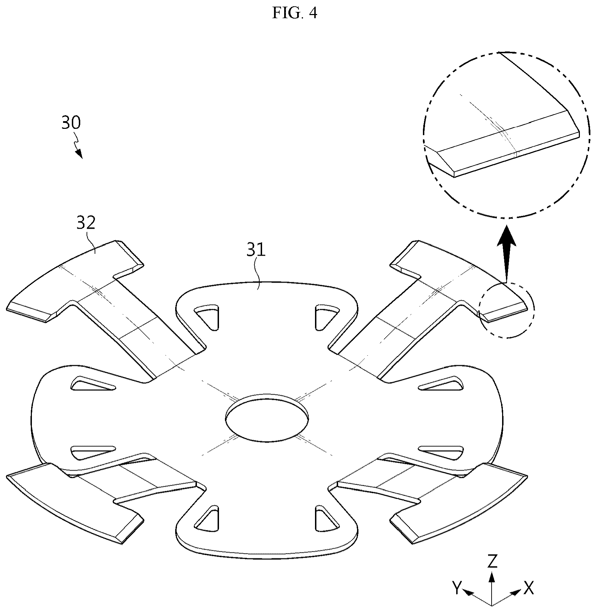

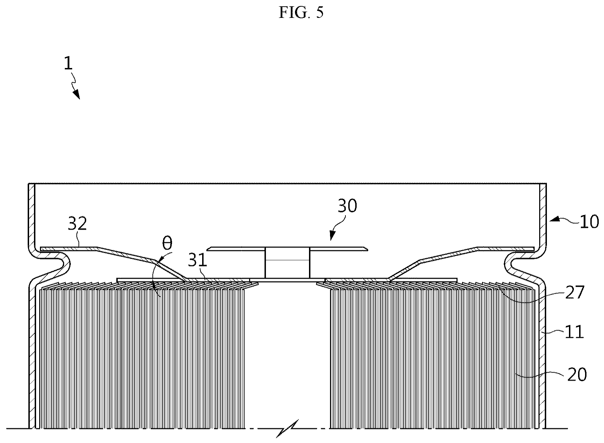

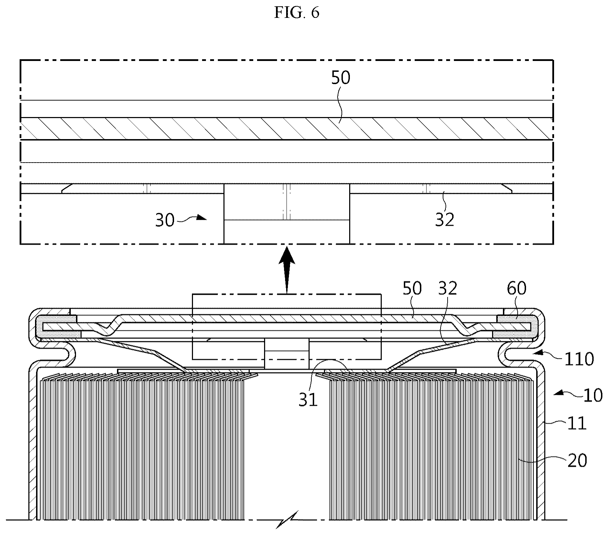

FIG. 4 is a drawing schematically illustrating a current collector 30 of the battery cell 1 in FIG. 1, FIG. 5 is a drawing illustrating a state in which the current collector 30 and the electrode assembly 20 are coupled in FIG. 4, and FIG. 6 is a drawing illustrating a state in which the battery cell 1 is sealed by a crimping process in FIG. 1.

Referring to FIGS. 4 to 6, the battery cell 1 according to the present embodiment includes a current collector 30, a cap 50, and a gasket 60.

The current collector 30 may be electrically connected to at least one end of the electrode assembly 20 in the axial direction. In this case, the current collector 30 may be electrically connected to the first electrode 21 or the second electrode 22.

The current collector 30 may be joined to a substantially flat surface provided by bending the plurality of notched tabs 27 exposed at both ends of the electrode assembly 20 in the winding-axis direction Z.

For example, the current collector 30 may be a negative electrode current collector made of copper or a positive electrode current collector made of aluminum. In addition, the current collector 30 may be manufactured by punching, trimming, piercing, and bending a metal sheet, but the manufacturing method and materials thereof are not limited thereto.

In this case, the current collector 30 connected to the first electrode 21 may be excluded.

Specifically, the current collector 30 may be provided with an electrode connection portion 31 and a can connection portion 32.

The electrode connection portion 31 is an area electrically connected to one end of the electrode assembly 20, and may efficiently collect and transmit current generated in the electrode assembly 20.

The electrode connection portion 31 may be in direct contact with the electrode assembly 20, thereby minimizing resistance in the current transmission path and ensuring stable electrical connection.

The can connection portion 32 may be connected to the electrode connection portion 31, and may extend radially outward from the electrode connection portion 31 toward the side wall member 11 of the battery can 10. Accordingly, a path may be provided for efficiently transmitting the current collected through the electrode connection portion 31 to an external circuit through the side wall member 11 of the battery can 10.

At least a portion of the edge tip of the can connection portion 32 may have a chamfered shape. Here, the chamfered shape indicates a structure designed to relieve stress concentration on the contact area between parts and increase sealing power by processing the edge tip to have a gentle slope.

That is, such a chamfered shape may configure a relatively gentle structure, compared to a structure in which the edge tip of the can connection portion 32 is formed to be perpendicular to the ground.

Therefore, the chamfered shape may provide a technical advantage capable of eliminating the disadvantages of the conventional edge having a sharp and straight structure. In particular, it may effectively contribute to reducing a void that may be formed when the edge of the can connection portion 32 that has not been chamfered is pressed onto another component, such as the gasket 60 to be described later or the side wall member 11 of the battery can 10.

As described above, the chamfered shape may optimize the contact area, thereby significantly improving sealing power with a soft member, such as the gasket 60 to be described later. Through this, the sealing performance may be maximized and the risk of gas or electrolyte leakage from the battery cell 1 may be minimized.

The can connection portion 32 may extend from the electrode connection portion 31 to be inclined at a predetermined angle θ with respect to the axial direction. As a result, the can connection portion 32 may facilitate the coupling with the beading portion 110 of the battery can 10, and may contribute to simplifying the assembly process.

In addition, such an inclined structure may optimize the contact area between the beading portion 110 of the battery can 10 and the can connection portion 32, which will be described later. Through this, mechanical stability may be secured even under physical stress such as external impact or vibration after assembly.

In addition, a plurality of can connection portions 32 may be provided along the circumferential direction. The can connection portions 32 may be spaced a predetermined distance apart from each other. This structure may prevent interference between the plurality of can connection portions 32 and evenly distribute the contact area with the battery can 10, thereby securing structural stability. In addition, since the plurality of can connection portions 32 are appropriately arranged along the circumferential direction, alignment may be improved during the coupling process with the battery can 10 and the assembly process may be performed efficiently.

As described above, since the plurality of can connection portions 32 are formed, both ends of the edge of each can connection portion 32 may be disposed between adjacent can connection portions 32 positioned along the circumferential direction. This structure will be described in detail later.

The cap 50 may cover the opening of the battery can 10. That is, the cap 50 may be configured as a cover structure capable of effectively sealing the opening of the battery can 10. Accordingly, the battery cell 1 may be guaranteed to be sealed, and the internal electrolyte and electrode assembly 20 may be protected from the external environment, and the performance of the battery cell 1 may be maintained for a long time.

The cap 50 may be generally made of a metal material for electrical connection with the current collector 30. Therefore, the cap 50 may have conductivity. For example, the cap 50 may include an aluminum material.

The cap 50 may have a disk shape to be fixed to the opening of the battery can 10 or to seal the opening, but the shape is not limited thereto. In addition, the thickness of the cap 50 may be designed to provide sufficient strength to prevent deformation in a high temperature or high pressure environment, and to secure durability to prevent leakage of the internal electrolyte.

The gasket 60 may be interposed between the battery can 10, for example, the side wall member 11 of the battery can 10, and the cap 50.

The gasket 60 may act as a sealing member that maintains the airtightness of the battery cell1, protects the battery cell1 from the external environment, and prevents leakage of the gas and electrolyte. In particular, the gasket 60 may be designed to maintain a stable sealing state even when the pressure changes due to compression between the cap 50 and the side wall member11 of the battery can 10 during the crimping process.

The gasket 60 may have flexibility and compressibility capable of responding to external stress such as thermal expansion or vibration. In addition, the gasket 60 may be made of a material with excellent chemical resistance and heat resistance (e.g., rubber, silicone, etc.) so as to prevent chemical reaction with the electrolyte and provide stable performance even in a long-term use environment.

As an example, the battery can10 may have a beading portion110 and seal the inside of the battery cel11 through the crimping process.

The beading portion 110 of the battery can 10 may be formed to be recessed inward in the radial direction to a predetermined depth from the side of the battery can 10 along the circumference thereof near the opening. Accordingly, the position of the electrode assembly 20 stored inside the battery can 10 may be restricted to a certain extent, and the process of sealing the interior of the battery can 10 may be facilitated later.

Here, the edge of the can connection portion 32 may be interposed between the beading portion 110 of the battery can 10 and the gasket 60. That is, the gasket 60 may be pressed against the edge of the can connection portion 32 disposed on the beading portion 110 of the battery can 10, thereby sealing the battery can 10.

This structure enables the edge of the can connection portion 32 and the gasket 60 to be in stable contact with the beading portion 110 through the crimping process, thereby maintaining the airtightness inside the battery cell 1.

However, even in the crimping process of performing the sealing on the beading portion 110 of the battery can 10 by placing the gasket 60, a fine gap may be formed due to the presence of the current collector 30. In particular, the pressure is not uniformly transmitted through the contact area with the gasket 60, including the end of the edge of the current collector 30, which is likely to result in a local pressure imbalance. This may cause the formation of a small gap.

Such a gap may reduce the sealing power between the beading portion 110 of the battery can 10 and the gasket 60, and may weaken the airtightness inside the battery cell 1 over time. In particular, the gap may expand under stress conditions such as thermal expansion, vibration, or impact from the external environment, which may increase the risk of gas or electrolyte leakage.

To this end, as described above, the battery cell 1 according to the present embodiment may be designed to have a chamfered shape provided on at least a portion of the edge tip of the can connection portion 32, so that stress may be uniformly distributed over the contact surface with the gasket 60 when pressed.

As a result, the gasket 60 may be stably pressed on the edge of the can connection portion 32 and on the beading portion 110 of the battery can 10, thereby reducing the risk of leakage and improving the reliability of the battery cell 1.

Therefore, the battery cell 1 according to the present embodiment may be configured to have a chamfered shape in at least a portion of the edge tip of the can connection portion 32 of the current collector 30 to further enhance the airtightness inside the battery cell 1, prevent leakage of gas or electrolyte, and maintain a stable sealing state even under physical stress conditions such as external impact or vibration.

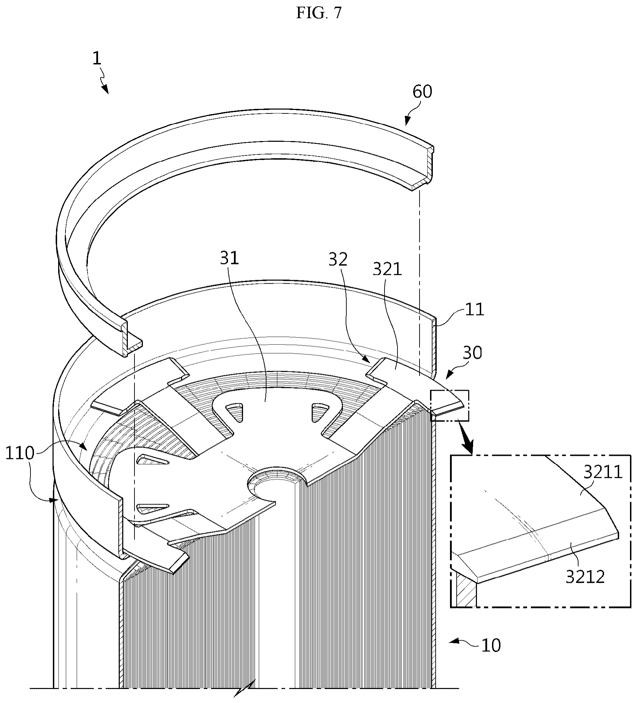

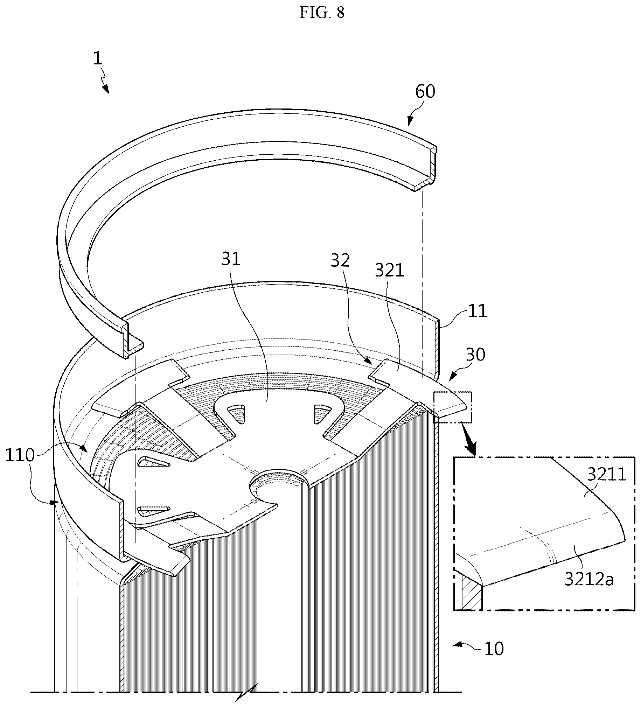

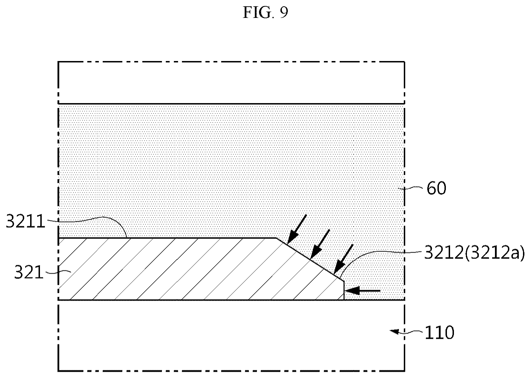

FIGS. 7 and 8 are drawings illustrating an example in which a gasket 60 is disposed on the current collector 30 in FIG. 4, and FIG. 9 is a drawing illustrating a state in which a coupling portion 321 of the current collector 30 is interposed between a beading portion 110 of the battery can 10 and the gasket 60 in FIG. 4.

Referring to FIGS. 7 to 9, the can connection portion 32 according to the present embodiment may have a coupling portion 321 on the edge of the can connection portion 32. In this case, the coupling portion 321 may be interposed between the beading portion 110 of the battery can 10 and the gasket 60, and may have a chamfered shape in at least a portion thereof.

As an example, the coupling portion 321 may include a flat portion 3211 and a side end 3212 connected to the flat portion 3211 and disposed on both sides in the circumferential direction.

The flat portion 3211 may be formed flat for stable and uniform contact with the beading portion 110 of the battery can 10 and the gasket 60.

The side ends 3212 are located on both sides of the coupling portion 321 and may assist in the structural stability of the coupling portion 321.

In this case, the coupling portion 321 may be designed such that the lower area is greater than the upper area, based on the axial direction. To this end, the side end 3212 may be processed to be inclined at least at a predetermined angle. This inclined shape may optimize the contact area between the coupling portion 321 and the beading portion 110 of the battery can 10 to increase the strength of the mechanical coupling and increase the compression force with the gasket 60, thereby improving sealing performance. In addition, the inclined shape may alleviate stress concentration that may occur at the side end 3212 of the coupling portion 321, thereby maintaining structural stability and stabilizing the sealing state in the long term.

In addition, during the crimping process or coupling of components, the coupling portion 321 may be naturally aligned to reduce interference between components and simplify the assembly process. In addition, the coupling portion 321 may provide greater support when in contact with the beading portion 110 of the battery can 10, thereby increasing resistance to external impact or vibration.

As described above, the inclined processing coupling portion 321 may remove the gap and improve sealing performance while simplifying the manufacturing process.

In another embodiment, the coupling portion 321 may include a flat portion 3211 and a side end 3212a connected to the flat portion 3211 and disposed on both sides along the circumferential direction.

The flat portion 3211 may be formed flat for stable and uniform contact with the beading portion 110 and the gasket 60.

The side end 3212a may be located on both sides of the coupling portion 321, and may assist in the structural stability of the coupling portion 321.

In this case, the coupling portion 321 may be designed such that the lower area is greater than the upper area with respect to the axial direction, and to this end, the side end 3212a may be processed to have a predetermined curvature. This shape with a curvature may more precisely control the contact pressure distribution between the coupling portion 321 and the gasket 60, making the pressure distribution at the side end 3212a uniform. Therefore, the coupling portion 321 may greatly improve the sealing performance and prevent the formation of a gap, thereby contributing to maximizing the airtightness.

As described above, the coupling portion 321 with a curvature may secure long-term stability by relieving the deformation of the gasket 60 even during the contact process with the gasket 60.

Therefore, the battery cell 1 according to the present embodiment may have the side end 3212 or 3212a of the coupling portion 321, which is chamfered, thereby more effectively increasing the compression force and the sealing power transmitted from the gasket 60 to the side end 3212 or 3212a, compared to the configuration before the chamfering.

The coupling portion 321 may be formed to have a thickness smaller than the thickness of the gasket 60 in the axial direction. Therefore, the coupling portion 321 may be sufficiently compressed and interposed between the gasket 60 and the beading portion 110 of the battery can 10.

In this case, the gasket 60 may be configured to come into contact with the coupling portion 321 and the beading portion 110 of the battery can 10 positioned between the coupling portions 321. In this case, the gasket 60 may be designed according to the characteristics of the coupling portion 321 and the beading portion 110 in the crimping process, and may have different properties between the portion in contact with the coupling portion 321 and the portion in contact with the beading portion 110.

For example, the gasket 60 may have a higher hardness at the portion in contact with the coupling portion 321. This configuration may maintain a stable sealing state by preventing the gasket 60 from being excessively deformed even under high pressure, and may stably maintain the sealing power with the coupling portion 321 during the crimping process.

On the other hand, the portion of the gasket 60 in contact with the beading portion 110 of the battery can 10 may have a relatively low hardness. As a result, it may smoothly adapt to the curvature and surface irregularity of the beading portion 110 of the battery can 10, and maximize the sealing power during the crimping process, thereby preventing the formation of gaps.

In addition, the gasket 60 may be configured to come into contact with the chamfered portion and the non-chamfered portion of the coupling portion 321 with a relatively uniform pressure distribution. In this case, the gasket 60 may have different properties between the two contact portions.

For example, the portion of the gasket 60 in contact with the chamfered portion of the coupling portion 321 may have a relatively low hardness and high resilience. This allows the gasket 60 to smoothly adapt to the chamfered shape, thereby maximizing the sealing power and minimizing the formation of gaps.

On the other hand, the portion of the gasket 60 in contact with the non-chamfered portion of the coupling portion 321 may have a relatively high hardness. Therefore, it may provide stable support even under high pressure conditions. These properties may induce balanced compression and deformation of the gasket 60 during the crimping process, thereby optimizing the sealing performance in the entire area of the coupling portion 321.

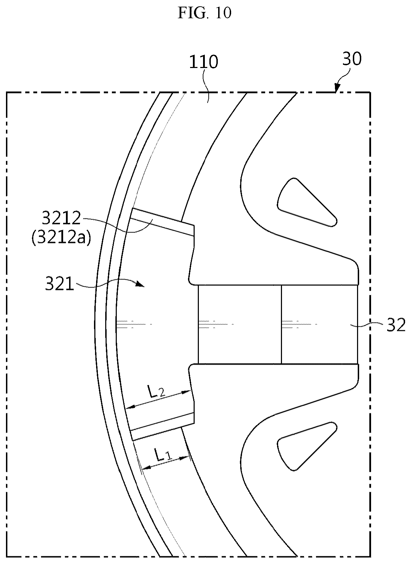

FIGS. 10 to 12 are drawings schematically illustrating various embodiments of the coupling portion of the current collector 30 in FIG. 4.

The coupling portion of the current collector 30 according to various embodiments of the present disclosure may be formed in various shapes or sizes. That is, the coupling portion may be adjusted according to design requirements in order to optimize the structural stability, sealing performance, and electrical connection efficiency of the battery cell 1.

Referring to FIG. 10, as an example, the coupling portion 321 may have a width L₂ greater than the width L₁ of the beading portion 110 in the radial direction. This structure may be advantageous in maximizing the compression force and minimizing the formation of a gap by increasing the contact area between the coupling portion 321 and the gasket 60.

In this case, the coupling portion 321 may include a side end 3212 and 3212a that is substantially in contact with the gasket 60. The side end 3212 or 3212a may be connected to the flat portion 3211 and disposed in the circumferential direction, and may include a chamfered shape.

Therefore, the chamfering of the side end 3212 or 3212a may further strengthen the sealing power with the gasket 60 and uniformize the pressure distribution, thereby maintaining long-term airtightness.

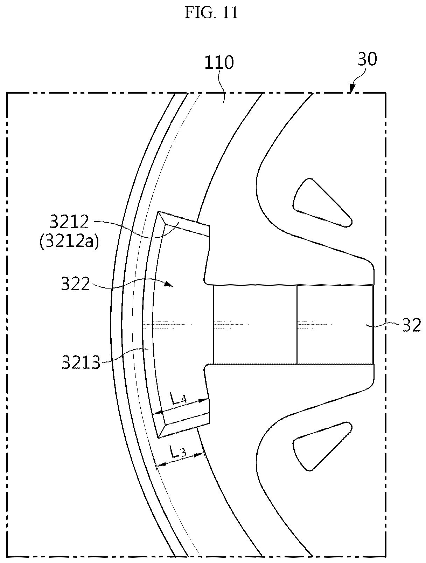

Referring to FIG. 11, as an example, the coupling portion 322 may have a width L₄ that is smaller than or equal to the width L₃ of the beading portion 110 in the radial direction. For example, the coupling portion 322 may be configured such that at least a portion extends further inward than the beading portion 110 in the radial direction.

In this case, the coupling portion 322 may include a chamfered shape not only at the side end 3212 or 3212a but also at a distal end 3213 that is connected to the flat portion 3211 and is located radially outward.

The side end 3212 or 3212a and the distal end 3213 may substantially come into contact with the gasket 60 in the coupling portion 322, and may have chamfered shapes, thereby enabling pressure uniformity and enhancing sealing performance through optimization of the contact area.

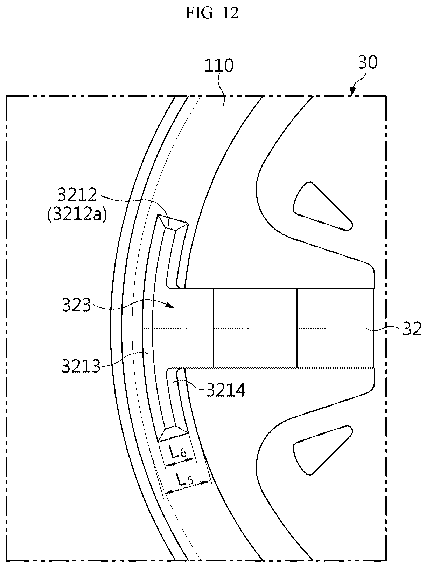

In addition, referring to FIG. 12, as an example, the coupling portion 323 may have a width L₆ smaller than the width L₅ of the beading portion 110 in the radial direction. In this case, the entire area of the coupling portion 323 may be completely interposed between the beading portion 110 of the battery can 10 and the gasket 60. This structure allows the entire area of the coupling portion 323 to be in close contact with the gasket 60, thereby maximizing the sealing features.

In this case, in addition to the side end 3212 or 3212a and the distal end 3213 of the coupling portion 323, an inner end 3214 connected to the flat portion 3211 and positioned radially inward may have a chamfered shape. This structure may provide uniform sealing in all contact areas between the gasket 60 and the coupling portion 323, thereby maintaining a stable sealing state even when deformed due to external impact or thermal expansion.

In addition, as an example, the distal end 3213 of the coupling portion 323 may come into contact with the side wall member 11 of the battery can 10. In this case, if the distal end 3213 has a chamfered shape, the distal end 3213 may naturally adapt to the curved surface of the beading portion 110 of the battery can 10. That is, the distal end 3213 having a relatively small thickness may be more tightly sealed between the gasket 60 and the battery can 10. In particular, the distal end 3213 having a relatively small thickness may maximize the contact area with the gasket 60 in the crimping process, so that the pressure may be transmitted evenly to improve the sealing performance. This may minimize the gap that may be formed between the beading portion 110 of the battery can 10 and the gasket 60, thereby ensuring airtightness inside the battery cell 1 and securing long-term sealing stability.

Therefore, the battery cell 1 according to the present embodiment may maximize sealing performance by providing a chamfered end to the coupling portion 323 of the current collector 30 and optimizing the joint stability between the beading portion 110 of the battery can 10 and the gasket 60.

As described above, the chamfered end may relieve deformation of the gasket 60, evenly distribute pressure to minimize the formation of a gap, and secure long-term airtightness and mechanical stability. In addition, the coupling portion 321, 322, or 323 may be flexibly changed in size and shape depending on the application environment.

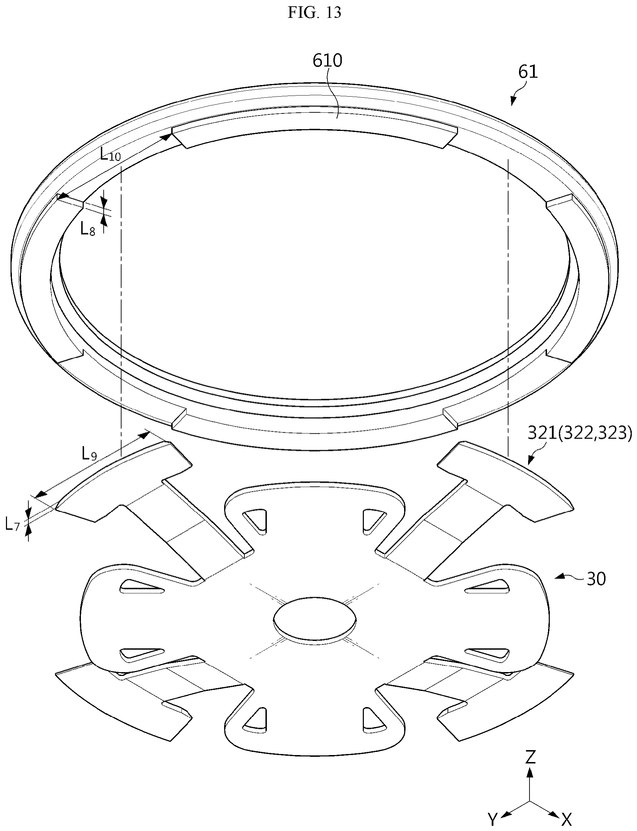

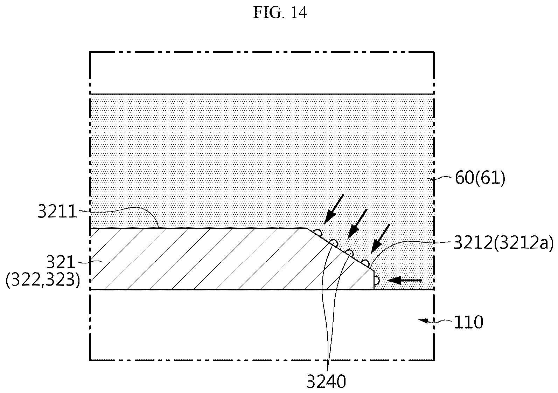

FIG. 13 is a drawing illustrating a state in which a gasket 61 is disposed on the current collector 30 in FIG. 4 according to another embodiment, and FIG. 14 is a drawing illustrating a protrusion part 3240 formed on the current collector 30 in FIG. 4.

Referring to FIG. 13, the battery cell 1 according to the present embodiment may include a gasket 61. FIG. 13 illustrates a state in which a gasket 61 is disposed on the current collector 30 when viewed from below in the winding-axis direction Z.

The gasket 61 may be configured to come into contact with the coupling portion 321, 322, or 333 and the beading portion 110 of the battery can 10 disposed between the coupling portions 321, 322, or 333. In this case, the gasket 61 may be provided with a protruding portion 610 having a predetermined height at the portion that comes into contact with the beading portion 110 of the battery can 10. This protruding portion 610 is a structural element designed to maximize the sealing power of the gasket 61 between the beading portion 110 and the coupling portion 321, 322, or 333, and contributes to enhancing the sealing performance and minimizing the formation of gaps.

The protruding portion 610 may be configured to have the same thickness L₈ as the thickness L₇ of the coupling portion 321, 322, or 333 with respect to the axial direction, and thus, the gasket 61 may transmit a uniform pressure to the coupling portion 321, 322, or 333 and the beading portion 110 of the battery can 10 during the crimping process. In addition, the protruding portion 610 may be designed to have a shape corresponding to the chamfered shape of the coupling portion 321, 322, or 333. This design may further strengthen the sealing between the gasket 61 and the coupling portion 321, 322, or 333 and further prevent sealing loss that may occur during the crimping process.

A plurality of protruding portions 610 may be arranged along the circumferential direction, and the distance L₁₀ between the protruding portions may match the width L₉ of the coupling portion 321, 322, or 333 to be disposed therebetween. Accordingly, the protruding portion 610 may secure alignment between the gasket 61 and the coupling portion 321, 322, or 333 and ensure stable arrangement during the assembly process.

Therefore, the battery cell 1 according to the present embodiment may induce the gasket 61 to be more closely attached to the beading portion 110 and the coupling portion 321, 322, or 333 of the battery can 10, maintain the airtightness inside the battery cell 1, and provide long-term reliability and durability.

Referring to FIG. 14, the coupling portion 321, 322, or 333 may be configured to have a region having a chamfered shape, and a protrusion part 3240 including a plurality of protrusions coming into contact with the gasket 60 or 61 and strengthening the sealing power may be formed in this region. This protrusion part 3240 may be disposed at various positions depending on the configuration of the coupling portion 321, 322, or 333.

For example, the protrusion part may be formed on the flat portion 3211 or the side end 3212 or 3212a. In addition, the protrusion part 3240 may also be formed on the distal end 3213 forming the outer area of the coupling portion 321, 322, or 333 or the inner end 3214 positioned inward.

Therefore, the protrusion part 3240 may increase the contact area with the gasket 60 or 61 and maximize the sealing power between the coupling portion 321, 322, or 333 and the gasket 60 or 61 during the crimping process, thereby preventing the formation of a gap.

The protrusion part 3240 may not only strengthen the sealing performance by concentrating local pressure on the contact surface with the gasket 60 or 61, but also maintain a stable position of the gasket 60 or 61 during the crimping process. As a result, the interaction between the coupling portion 321, 322, or 333 and the gasket 60 or 61 may be optimized to increase the airtightness and sealing reliability inside the battery cell 1.

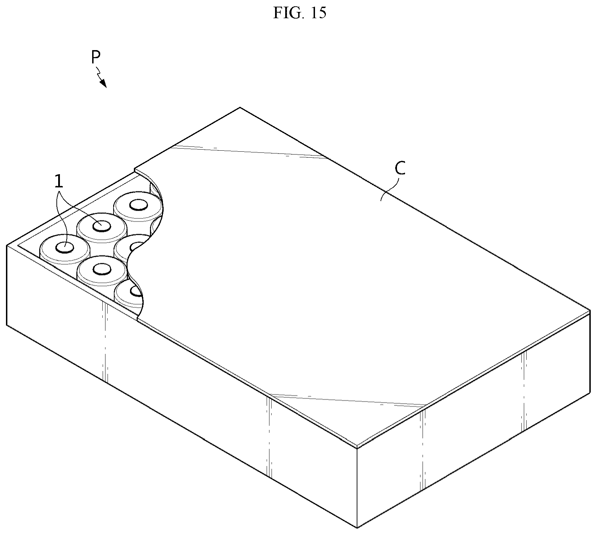

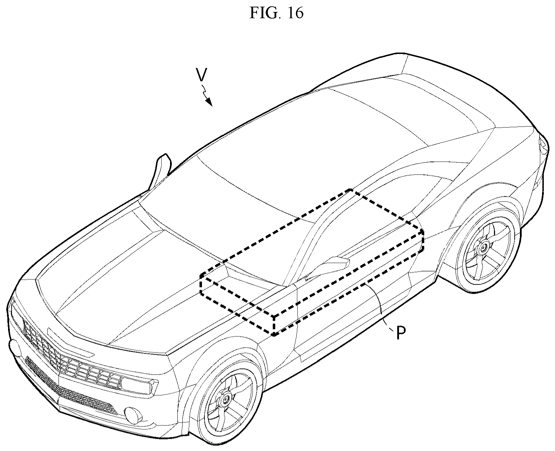

FIG. 15 is a drawing schematically illustrating a battery pack P including a battery cell 1 according to an embodiment of the present disclosure, and FIG. 16 is a drawing schematically illustrating a vehicle V including a battery pack P according to an embodiment of the present disclosure.

Referring to FIG. 15, the battery pack P according to an embodiment of the present disclosure may include at least one battery cell 1 according to the embodiments described above and a pack case C storing the same.

The battery pack P according to an embodiment of the present disclosure may further include various other components of the battery pack P known at the time of filing the present disclosure. For example, the battery pack P according to an embodiment of the present disclosure may further include components such as a current sensor, a fuse, and a service plug.

The battery pack P is not limited to a specific cooling method to be applied thereto, such as a bottom cooling method and a side cooling method, regardless of the arrangement direction of the battery cells 1, and the cooling method may be freely adopted according to the design requirements. Accordingly, the battery pack P may be configured to optimize the performance of the battery cell 1 and be suitable for various application environments by combining various structural designs and thermal management systems.

Referring to FIG. 16, the vehicle V according to an embodiment of the present disclosure may include one or more battery packs P according to the present disclosure. In addition, the vehicle V according to an embodiment of the present disclosure may further include various other components included in the vehicle in addition to the battery pack P. For example, the vehicle V according to an embodiment of the present disclosure may further include a car body, a motor, a control device such as an ECU (electronic control unit), and the like, in addition to the battery pack P according to an embodiment of the present disclosure.

In addition, it is obvious that the battery pack P according to an embodiment of the present disclosure may be applied to other devices, equipment, and facilities, such as an energy storage system using a secondary battery, in addition to the vehicle V.

According to various embodiments as described above, there may be provided a battery cell 1 capable of further improving sealing performance, and a battery pack P and vehicle V including the same.

As described above, although the present disclosure has been described by limited embodiments and drawings, the present disclosure is not limited thereto, and it is obvious that various modifications and variations are possible inside the scope equivalent to the technical idea of the present disclosure and the patent claims to be described below by a person of ordinary skill in the art to which the present disclosure belongs.

### [Description of reference numerals]

1: Battery cell
10: Battery can
11: Side wall member
110: Beading portion
111: Support
12: Bottom member
20: Electrode assembly
21: First electrode
22: Second electrode
23: Metal foil
24: Coated portion
25: Active material layer
26: Uncoated portion
27: Notched tab
28: Separator
30: Current collector
31: Electrode connection portion
32: Can connection portion
321, 322, 323: Coupling portion
3211: Flat portion
3212, 3212a: Side end
3213: Distal end
3214: Inner end
3240: Protrusion part
50: Cap
60 or 61: Gasket
610: Protruding portion
P: Battery pack
C: Pack case
V: Vehicle

## Claims

1. A battery cell comprising:
a battery can comprising a bottom member and a side wall member connected to the bottom member and extending in an axial direction, and having an opening at one end;
an electrode assembly configured to be received inside the battery can through the opening of the battery can;
a cap configured to cover the opening of the battery can;
a gasket interposed between the battery can and the cap; and
a current collector having an electrode connection portion having at least a portion electrically connected to one end of the electrode assembly, and a can connection portion extending outward in a radial direction from the electrode connection portion toward the side wall member of the battery can,
wherein at least a portion of an edge tip of the can connection portion has a chamfered shape.

2. The battery cell according to claim 1,
wherein the can connection portion
extends from the electrode connection portion so as to be inclined at a predetermined angle with respect to an axial direction.

3. The battery cell according to claim 1,
wherein the can connection portion
is provided in plurality along a circumferential direction so as to be spaced apart from each other.

4. The battery cell according to claim 1,
wherein the battery can comprises
a beading portion recessed inward in the radial direction from a side of the battery can along a circumference near the opening of the battery can, and
wherein an edge of the can connection portion is interposed between the beading portion of the battery can and the gasket.

5. The battery cell according to claim 4,
wherein the can connection portion
has a coupling portion positioned at the edge of the can connection portion and interposed between the beading portion of the battery can and the gasket, and
wherein the coupling portion
has a chamfered shape at least in a portion thereof.

6. The battery cell according to claim 5,
wherein the coupling portion
has a shape processed to be inclined at a predetermined angle in at least a portion, and is configured such that a lower area of the coupling portion is greater than an upper area, based on the axial direction.

7. The battery cell according to claim 5,
wherein the coupling portion
has a shape processed to have a predetermined curvature in at least a portion, and is configured such that a lower area of the coupling portion is greater than an upper area, based on the axial direction.

8. The battery cell according to claim 5,
wherein the coupling portion
is formed to have a thickness smaller than a thickness of the gasket, based on the axial direction.

9. The battery cell according to claim 5,
wherein the gasket
is configured to be in contact with the coupling portion and the beading portion of the battery can exposed between adjacent coupling portions, and has different properties between a portion in contact with the coupling portion and a portion in contact with the beading portion of the battery can.

10. The battery cell according to claim 9,
wherein the gasket
has different properties between a chamfered portion and a non-chamfered portion of the coupling portion.

11. The battery cell according to claim 5,
wherein the coupling portion comprises:
a flat portion in contact with the beading portion;
a distal end connected to the flat portion and disposed outward in the radial direction;
an inner end connected to the flat portion and disposed inward in the radial direction; and
a side end connected to the flat portion and disposed along a circumferential direction, and
at least one of the distal end, the inner end, and the side end has a chamfered shape.

12. The battery cell according to claim 11,
wherein the coupling portion
has a width greater than a width of the beading portion, based on the radial direction, and has a chamfered shape at least on the side end.

13. The battery cell according to claim 11,
wherein the coupling portion
has a width smaller than or equal to a width of the beading portion, based on the radial direction, and has a chamfered shape at the distal end, the inner end, and the side end.

14. The battery cell according to claim 11,
wherein the distal end of the coupling portion
is in contact with the side wall member of the battery can and has a chamfered shape.

15. The battery cell according to claim 5,
wherein the gasket
is in contact with the coupling portion and the beading portion of the battery can exposed between adjacent coupling portions, and
wherein a protruding portion having a predetermined height is formed in a portion in contact with the beading portion of the battery can.

16. The battery cell according to claim 15,
wherein the protruding portion
is formed to have a thickness equal to a thickness of the coupling portion, based on the axial direction.

17. The battery cell according to claim 15,
wherein the protruding portion
has a shape corresponding to the chamfered shape of the coupling portion, and is configured to be in contact with the beading portion of the battery can.

18. The battery cell according to claim 5,
wherein the coupling portion
has a protrusion part formed to have a plurality of protrusions configured to come into contact with the gasket in an area having a chamfered shape.

19. A battery pack comprising a battery cell according to any one of claims 1 to 18.

20. A vehicle comprising at least one battery pack, mounted thereto, according to claim 19.
